# EUROPEAN PATENT SPECIFICATION

(11) **EP 1 849 270 B1**
(45) Date of publication and mention of the grant of the patent: **30.08.2017**
(21) Application number: 06708972.2
(22) Date of filing: 16.02.2006
(51) Int. Cl.: H04L 29/12, H04L 12/66, H04L 29/06, H04L 29/08, H04W 80/10

(54) **INTERWORKING**
INTERWORKING
INTERFONCTIONNEMENT

(30) Priority: 18.02.2005 FI 20055078
(43) Date of publication of application: 31.10.2007
(73) Proprietor: Telia Company AB, 169 94 Solna (SE)
(72) Inventor: ALA-LUUKKO, Sami, FI-00200 Helsinki (FI); JALKANEN, Tero, FI-04340 Tuusula (FI)
(74) Representative: Kolster Oy Ab
(86) International application number: PCT/FI2006/050068
(87) International publication number: WO 2006/087429

(56) References cited:
- EP-A2- 1 398 978
- WO-A1-02/054665
- WO-A1-03/034772
- US-A1- 2002 010 799
- US-A1- 2003 027 595
- US-A1- 2003 135 740
- US-A1- 2005 039 017
- TELENOR (ORIGIN GSMA): "Inter-PLMN Backbone Guidelines", 3GPP DRAFT; S3Z000005, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Munich; 20001031, 31 October 2000 (2000-10-31), XP050269920, [retrieved on 2000-10-31]

## Description

### Field of the invention

The invention relates to interworking between domains, and particularly to interworking between various IP (internet protocol) based domains.

### Background of the invention

The evolvement of communication technology, particularly IP-based communication technology, and user terminals has enabled versatile communication possibilities. While communication technology and usage of communication possibilities have increased at a high pace, the number of domains and domain operators, such as service provides or conventional network operators, is also increasing at a high pace. A basic requirement for enabling use of various services between users in different domains and for enabling communication between subscribers of different domains is interworking among the domains of different operators.

A problem relating to interworking and IP based communication, especially to charging, is that there should be a mechanism for securing that the sender is the one who he claims to be. US 2002/010799 discloses a relay system having different kind of units facilitating relaying a packet between systems having different routing protocols. One of the unit is an inter domain connection definition table containing a definition of connectability between an arbitrary couple of domains, and a definition of an address translation algorithm used when establishing a connection between the connectable domains. In the table,"N" indicates that the connection is permitted by implementing NAT (IP Network Address Translator, "X" represents that the connection unpermitted and "-" represents a normal connection (within the same domain) based on the packet forwarding process.

Telenor (origin GSMA): "Inter-PLMN Backbone Guidelines"", 3GPP draft; s3z000005 introduces guidelines for GPRS inter-PLMN connections and requirements for inter-PLMN backbone network to create GTP-tunnelled PDP contexts via Gp interface between GSNs in different PLMNs. The IP addressing issues introduced in the document apply to inter- and intra-PLMN nodes. The document shortly discusses on services of the inter-PLMN backbone, GPRS roaming network, a central exchange point for roaming traffic, and on domain name service issues in GPRS.

### Brief description of the invention

An object of the present invention is to provide a method and an apparatus for implementing the method so as to alleviate the above disadvantage and to facilitate interworking arrangements between domains. The object of the invention is achieved by a method, a system, a network node, a database and a computer program product which are characterized by what is stated in the independent claims. The preferred embodiments of the invention are disclosed in the dependent claims.

The invention is based on detecting the problem and solving it by utilizing a network node via which at least signalling and corresponding control plane traffic with other domains passes through. The network node comprises or has access to a logically centralized database containing information required for the interworking. Such information includes information on domains which have interworking agreements and address information relating to domains, for example. When the network node receives a message, the network node uses the information in the database to check the sender's correctness and the existence of an agreement. If the sender is not a fake and an agree-ment exists, the network node forwards the message using address information in the database.

In an embodiment of the invention, the network node uses the information in the database to check the sender's correctness and the existence of an agreement. If the sender is not a fake one and an agreement exists, the network node forwards the message using address information in the database. An advantage of the embodiment is that each domain has to set up and maintain only one association, the association to the network node, regardless of the amount of domains with which the domain has interworking agreements. Thus, the embodiment facilitates providing secured communication, a prerequisite for enabling the charging. The interworking with secured communication according to prior art is typically implemented using what is known as IP security (IPsec) tunnelling. As known by a person skilled in the art, each domain has to set up and maintain IPsec security associations with each of the other domains for IPsec tunneling. Typically, the associations are maintained separately for inbound traffic and for outbound traffic. To set up, handle and maintain these associations with tens or hundreds of other domains is quite a heavy task which is avoided by the embodiment.

In another embodiment of the invention the network node is located in a reliable network. The fact that the network node is in a reliable network resolves security problems and enables charging.

### Brief description of the drawings

In the following the invention will be described in greater detail by means of preferred embodiments with reference to the accompanying drawings, in which
Figure 1 is a block diagram illustrating an example of a system according to an embodiment of the invention;
Figure 2 is a block diagram of a proxy according to an embodiment of the invention;
Figure 3 is a flow chart illustrating functionality of a proxy according to an embodiment of the invention; and
Figure 4 is a signalling chart showing an example of signalling according to an embodiment of the invention.

### Detailed description of some embodiments

The following embodiments are exemplary. Although the specification may refer to "an", "one", or "some" embodiment(s) in several locations, this does not necessarily mean that each such reference is to the same embodiment(s), or that the feature only applies to a single embodiment.

The present invention is applicable virtually to any communications system providing interworking between different domains, and particularly applicable to domains supporting IP-based services. A domain is typically a network operated by a single administrative authority and the term domain covers here different networks covering both domains of service providers purchasing the required bearer services and domains of network operators. The communications system may be a fixed communications system and/or a wireless communications system or any combination thereof. An example of such a system is an IP-based system, such as the access independent IMS (IP multimedia subsystem) having a layered architecture in which user traffic is in the user plane and signalling traffic, including session management, utilizes the control plane. Communications systems, especially wireless communications systems, develop rapidly. Such development may require extra changes to the invention. Therefore, all words and expressions should be interpreted broadly, and they are intended to illustrate, not to restrict the invention. As far as the invention is concerned, the relevant point is the function rather than the network node in which the invention resides.

In the following, the present invention is described using a system utilizing the IMS and GRX (GPRS Roaming Exchange), as an example of a system to which the present invention may be applied, without restricting the invention thereto. It should be appreciated that the systems, networks, and the transmission methods used are irrelevant to the actual invention. Therefore, they need not to be discussed in more detail here. The present invention primarily relates to a network node via which network node connection establishments between IP-based domains, or in some embodiments even within an IP-based domain, pass through, the network node comprising a database containing domain-related information to be described in detail below, or having access thereto. The network node is preferably located in a reliable network external to domains. Below, the combination of the external node and the corresponding database is called a proxy regardless of whether or not they are actually located in the same unit.

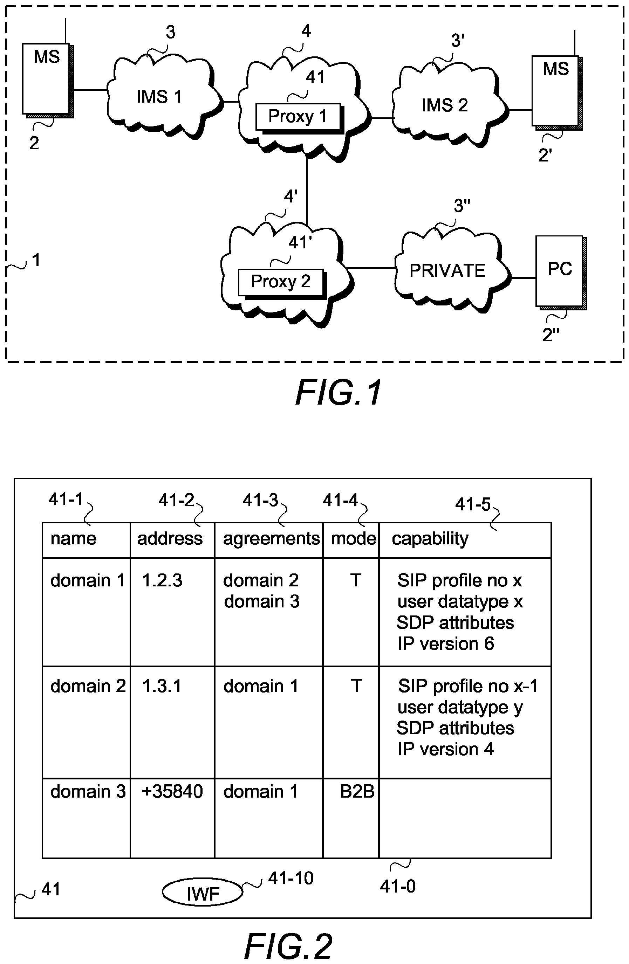

Figure 1 shows a very simplified system architecture only comprising a communications system 1, three user devices 2, 2', 2", different IP-based domains 3, 3', 3", and two reliable networks 4, 4'. Each of the different domains is preferably only connected, directly or via domain(s) and/or reliable network(s) with or without a proxy, to one proxy 41, 41' located in a reliable network. However, according to an embodiment of the invention, the invention may be implemented even when a domain is connected to two or more proxies and/or the proxy is located within the domain. It is apparent to a person skilled in the art that the system also comprises other devices, network nodes, system entities, functions and structures that need not be described in detail herein.

The user devices illustrate different endpoints of a communication, and they can be mobile terminals or fixed terminals, such as personal computers or mobile phones. The type and the functionality of the user devices is irrelevant to the invention and therefore they are not discussed in detail here.

The domains may be of a similar type or a different type. They may be domains of operators who are both service providers and access operators, or domains of service providers who purchase the access service. The latter include different ADSL service providers and other private networks. The domains may use the same protocol or different protocols, or different versions of the same protocol. A domain may be an open domain or a closed domain. In the example of Figure 1, a domain 2 (IMS1) is an IMS-type domain using SIP, a domain 2" (IMS 2) is also an IMS-type domain using the same or another version of SIP and a domain 2" is a private domain using H.323, for example. The IMS-types domains typically comprise a GGSN (Gateway GPRS Support Node) via which control plane and user plane traffic goes to and from the user devices to the IMS part of the domain. The IMS part typically comprises one or more call session control functions CSCF and a border gateway BG preferably connected to the proxy. The user plane traffic to other domains typically goes from GGSN to BG and from there either to the proxy or directly to a BG in another domain, whereas the control plane traffic goes from the GGSN to corresponding CSCF(s), from there to a BG and then to the proxy.

A reliable network 4, 4' containing a proxy 41, 41' may be based on a centralized IP (Internet Protocol) routing network of a GRX, which enables connecting different domains, roaming and a closed system to be implemented. GRX provides a reliable network, i.e. access is controlled with an ability to guarantee a certain service level with predictable delays, thus enabling also IMS users to be provided with many kind of services requiring a specific service level and predictable delays, such as sharing of real-time videos. Another advantage of using the GRX as an inter-domain network is the fact that because of commercial charge docketing procedures the network has to be secured and reliable, as the existing GRX is, and therefore the proxy via which the inter-domain traffic is routed may be used for charging purposes, too. Yet another advantage is that an existing network infrastructure may be utilized, thereby avoiding the need to build a new network infrastructure.

The term "reliable network" covers here all kinds of reliable networks able to comprise a proxy according to an embodiment of the invention. It should be appreciated that the technology of a network containing the proxy bears no significance to the invention as long as the required reliability, i.e. at least controllable access, can be provided. Thus, the reliable network may be a private IP-based network or any public communications network. Even the Internet may be used as a reliable network, provided that security issues are taken care of.

Different embodiments of the proxy according to the invention are disclosed in more details below with Figures 2, 3 and 4.

Although not shown in Figure 1, the proxy may be connected to DNS (domain name server) and/or Number portability database and/or ENUM (electronic numbering) database and/or to any corresponding server/database containing address information. The same applies to different servers containing subscriber information. The proxy may also have legacy access to an SS7 (signalling system 7) network via a Signalling Gateway for requesting information from an operator not having an ENUM database. The implementation and functionality of these servers/databases and the way in which the proxy obtains the required information bear no significance to the invention and therefore they are not discussed in detail here.

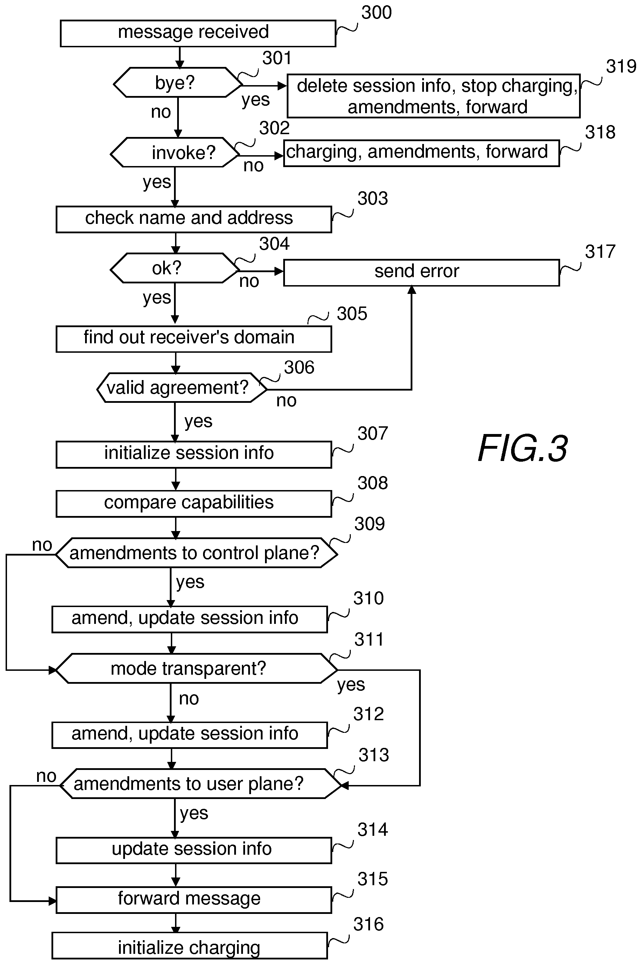

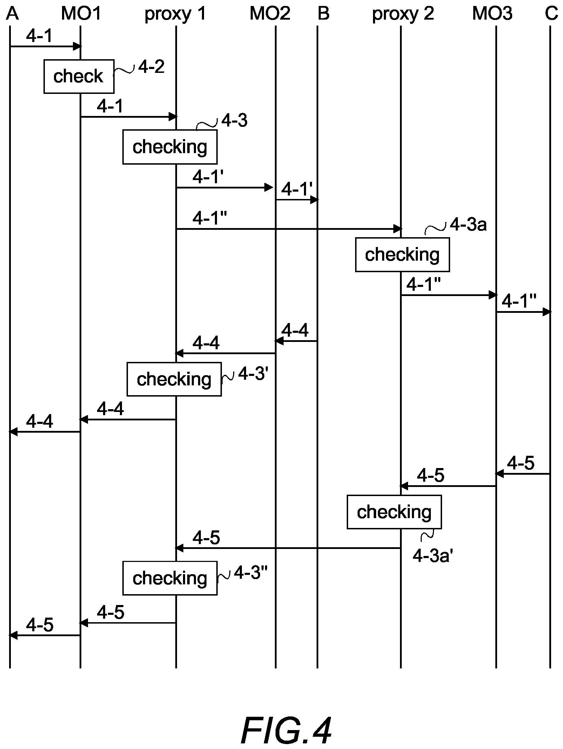

Figure 2 is a block diagram of a proxy according to an embodiment of the invention. The proxy may be a SIP (session iniation protocol) network access gateway, for example. In the embodiment of Figure 2, the proxy 41 contains an interworking function 41-10 (IWF) according to an embodiment of the invention and a database 41-0. Alternatively, the proxy may have access to a corresponding database. The term database covers here different solutions used to store data, such as storing them in one or more files or using a decentralized database. Examples of different embodiments of the interworking function are disclosed in more detail below with reference to Figures 3 and 4. It is apparent to a person skilled in the art that the proxy also comprises other entities, functions and structures that need not be described in detail herein. Examples of these include processor(s), memory, input/output bus, different network interfaces, etc.

The database 41-0 contains for each domain the logical name 41-1 of the domain, the address 41-2 which is used when traffic is routed to the domain, the agreements 41-3, i.e. information on domains with which the domain has agreed to interwork, a mode 41-4 to be used with the domain and capability 41-5 information on the domain.

The logical name 41-1 of the domain may be a host part of a logical IP address, i.e. an IP address in the form a@x.y where the host-part comes after the @-sign. A logical name may also be the name of an operator, a dialled number or part of the dialled number, for example in domains not using IP addressing. The address 41-2 is the actual routing address which is used when traffic is routed to (or towards) the domain from this proxy. The address is typically an address of a gateway network node in the domain. It may also be the address of a proxy to which the domain is connected. If the domain uses IP addressing, the address is typically the numerical form of the numerical IP address.

The agreements section 41-3 contains preferably the logical names of the domains having interworking agreements with the domain in question. If the domain in question is connected to this proxy, they are preferably all partner domains. For domains connected to another proxy, it suffices that the agreement section contains those partner domains connected to this proxy. Thus, making an agreement with a new domain requires at its simplest only adding the logical name of the partner domain to the agreement section in the database, and the interworking may begin, provided that other domain-related information has already been stored. Although not shown in Figure 2, the database may also store agreement-specifically certain conditions or rules to be applied only to connections to and from the domain the agreement relates to, for example. One example of the agreement-specific information is information on whether or not the user plane traffic is routed via the proxy.

The mode 41-4 information indicates whether or not the operator wants the proxy to be a transparent proxy (T) or a back-to-back user agent (B2B) proxy amending headers in SIP messages. The back-to-back user agent participates to a connection by receiving and processing messages as a corresponding server, such as a user agent server, and by participating to all call requests and by determining how the request should be answered and how to initiate outbound calls, i.e. as a corresponding user agent client.

The capability information 41-5 contains information on the properties of the domain and indicates the protocols and preferably the procedures by which network elements in the domain exchange information. Examples of such information in the IMS are the SIP profile number, user data type(s), values of SDP attributes, and the used IP version. On the basis of this information, the proxy knows what kind of messages and information can be sent to the domain and, in response to a message being in another format than the one used by the domain, to amend them to a proper format.

It is obvious that having this king of at least logically centralized database on domains with their interworking agreements, has the advantage that address information and capability information, for example, needs to be stored only once in a system. The updating of the information is also facilitated, since it has to be updated only once.

Figure 3 is a flow chart illustrating the functionality of a proxy according to an embodiment of the invention. In the embodiment of Figure 3 it is assumed, for the sake of clarity, that session invocation is accepted, the user plane traffic also goes through the proxy, and the proxy maintains session information session-specifically. Yet another assumption is that session-related traffic contains in this embodiment an indication on the basis of which the proxy recognizes the session to which the traffic relates, and therefore only a session set-up message is checked. However, it is apparent to a person skilled in the art, that the checking procedure or some of the following steps may be performed to each received message. Yet, for the sake of clarity, a further assumption is that one-to-many communication is transparent to the proxy, i.e. the proxy receives only messages having a single receiver. However, it is apparent to a person skilled in the art, how to implement the embodiment when one-to-many communication is not transparent to the proxy.

The checking procedure of Figure 3 begins when the proxy receives a message in step 300. In response to receiving the message the proxy checks in step 301 whether or not the message is a session termination related message, such as a SIP bye message. If it is not, the proxy checks in step 302 whether or not the message is a session set-up message, such as a SIP invoke message. If it is, the proxy checks in step 303, using the information in the database, the sender's name, such as the IP host-name, in the message as well as the address wherefrom the message was received. In other words, using the example shown in Figure 2 and assuming that the sender's name in the message is domain 1, it is checked whether or not the message was received from 1.2.3. By performing this checking, the proxy ensures that the sender is the one who he claims to be, i.e. fake invitations are noticed at this stage.

If the message contains the same name-address pair as is in the database (step 304), the proxy then finds out, in step 305, the proper domain on the basis of a receiver's name in the message. The receiver's name is typically in a format of MSISDN (mobile subscriber ISDN number) or NAI (network access identifier), i.e. a logical IP address a@x.y. This step may include an ENUM/MAP inquiry to find out the proper domain, and possibly a proper routing address, if the receiver's name is in the MSISDN format and/or if the name is a ported name. (Ported name means that the subscriber has changed an operator without changing the logical name.) If the receiver's name is in the NAI format and the name is not ported to another domain, the proxy simply uses the host part of the NAI. Thus, the domain operator may leave issues relating to domain/number portability to be solved by the operator providing the proxy. This allows also non-public domains to be altered as public ones thus facilitating the handling of these domains.

The proxy then checks in step 306 by using information on the proxy's database whether or not there is a valid agreement between the sender's domain and the receiver's domain. If an agreement exists, the proxy initializes in step 307 session information for this session and compares in step 308, by using the information stored in the database, the capabilities of the sender's domain with the capabilities of the receiver's domain. If the control plane capabilities differ between the two (step 309), the proxy performs in step 310 the required amendments to the message and adds to the session information in step 310 information on the required control plane amendments or an indication that they are needed. One difference requiring control plane traffic amendment may be that the sender's domain uses IP version 4 whereas the receiver's domain uses IP version 6, and therefore the message has to be amended from IP version 4 message to IP version 6 message. After the amendments, or if no amendments are required (step 309), the proxy checks in step 311 whether or not the mode of the sender's domain in the database is transparent. If the mode is not transparent (step 311), the proxy performs in step 312 the required amendments to the header and adds in step 312 to the session information an indication or information that B2B mode is to be used. After the amendments, or if no amendments are required (step 311), the proxy checks in step 313 whether or not the user plane capabilities differ between the two, and if they do, the proxy adds to the session information in step 314 information on the required user plane amendments or an indication that they are needed. One example of user plane amendments is change of codecs, such as a VoIP codec to a PoC (push-to-talk-over-cellular) codec. After having updated the session information, or if no amendments are required (step 313), the proxy forwards in step 315 the possible amended message to the address of the receiver's domain in the proxy's database.

The proxy then initializes in step 316 charging information for the session in question.

If there is no valid agreement between the sender's domain and the receiver's domains (step 306), or if the invitation was a fake invitation (step 304), the proxy sends an error in step 317.

If the message does not relate to the termination of a session (step 301) or to the establishment of the session (step 302), it is other session-related traffic and the proxy performs in step 318 required charging-related procedures, if any, and the required amendments, if any, and then forwards the traffic to the address of the receiver's domain in the proxy's database. Since the proxy knows how to amend the traffic, including the actual content of the traffic, the sender's domain or the receiver's domain does not have to perform this, neither maintain the required information.

If the message relates to the termination of the session (step 301), the proxy performs in step 319 required amendments, if any, and then forwards the traffic to the address of the receiver's domain in the proxy's database. The proxy also ends the charging and deletes the session information in step 319.

It is apparent from the above that the above described steps relating to charging enable both bit-based charging and charging based on something else, such as service-specific charging based on SIP/SDP messages. However, the implementation of the actual charging, such as forming charging data records etc. bears no significance to the invention and therefore it is not discussed in detail here.

As can be seen from the above, the proxy enables the connection legs to be different types of connections. For example, a connection leg may be a VoIP (Voice over IP) connection or a connection according to any H.323 or any SIP version regardless of the connection type of the other leg. The proxy performs the required amendments on the basis of the information in the proxy's database.

Figure 4 illustrates signalling according to an embodiment of the invention. In the example shown in Figure 4 it is assumed, for the sake of clarity, that domains MO1, MO2 and MO3 are using similar IMS networks, and reliable networks containing the proxies proxy 1 and proxy 2 are GRX networks. Yet another assumption made here is that in one-to-many communications the proxy performs the multiplication of the invite message.

In the example shown in Figure 4, user A, a client of domain MO1, starts a game session by sending a control plane message 4-1 to invite two friends, users B and C, to join the game session. The message may be a SIP message. The system, for example CSCF, in MO1 notices in point 4-2 that the session establishment is for users B and C who are not home users, i.e. they are clients of other domains. MO1 notices this on the basis of the identifiers, such as the MSISDN or NAI mentioned above in connection with Figure 3, of the receivers, i.e. users B and C,. MO1 may utilize a static list, MAP (mobile application part) inquiry, ENUM inquiry, etc. Since users B and C are not home users, message 4-1 is forwarded (via a border gateway, for example) to the proxy 1 in the reliable network to whose proxy MO1 is connected.

The proxy 1 performs in point 4-3 checking using its database. Depending on the implementation of the proxy 1, the checking may contain one or more of the steps described above in connection with Figure 3. In this example, the proxy 1 notices that MO1 has an agreement with MO2, the operator of the user B, and with M03, the operator of the user C. Since in this example the domains are similar, no amendments of messages are needed; only the address field is amended in this example. Therefore, the proxy forwards the content of message 4-1 towards the addresses stored in the database of the proxy 1 for MO2 and MO3. Since MO2 is also connected to the proxy 1, message 4-1' containing the content of message 4-1 and user B as a receiver is sent to MO2, i.e. more precisely to the network node whose address is in the database, which then forwards message 4-1' to the user B. MO3 is connected to another proxy, proxy 2, whose address is in the database of the proxy 1 for MO3, and therefore the proxy 1 sends message 4-1 to the proxy 2 in message 4-1", the message containing the content of message 4-1 and user C as a receiver. However, the proxy 1 is not aware that the address is for another proxy.

The proxy 2 performs in point 4-3a a checking using its database. Depending on the implementation of the proxy 2, the checking may contain one or more of the steps described above in connection with Figure 3. In this example, the proxy 2 notices that MO1 has an agreement with MO3 and that no amendments of messages are needed. The proxy 2 forwards the message 4-1" to MO3 on the basis of the address of MO3 in the database of proxy 2. MO3 then forwards message 4-1" to the user C.

Both the user B and the user C accept the invitation sent by the user A and send corresponding replies. The user B's reply, i.e. message 4-4, is sent via M02 to the proxy 1 which then performs in point 4-3' the checking procedure using the database. Depending on the implementation, the checking may be the same as the one performed in point 4-3 in response to the reception of message 4-1, or it may contain only some steps of the checking performed in point 4-3. The proxy 1 then forwards the reply, i.e. message 4-4, to MO1 on the basis of the address of MO1 in the database of proxy 1. MO1 forwards the reply to the user A.

The user C's reply, i.e. message 4-5, is sent via MO3 to the proxy 2 which then performs in point 4-3a' the checking procedure using the database. Depending on the implementation, the checking may be the same as the one performed in point 4-3a in response to the reception of message 4-1' or it may contain only some steps of the checking performed in point 4-3a. The proxy 2 then forwards the reply to the proxy 1 on the basis of the address of MO1 given in the database of proxy 2. The proxy 1 then performs, in point 4-3", a similar checking using the database as was performed in point 4-3'. The proxy 1 then forwards message 4-5 to MO1 on the basis of the address of MO1 given in the database of proxy 1. The MO1 forwards the reply to the user A.

In response to the received replies the user A starts to establish a data connection for the game between users A, B and C, which is not, however, described in detail here. The data connection is a user plane connection and its routing within MOs may be different than the routing of a corresponding control plane signalling. It is also possible that, although control plane signalling passes all the time through a proxy or proxies, the user plane data transmission does not pass through a proxy or proxies if the domains are connected to each other.

In another embodiment of the invention, all invitations are sent to the proxy, regardless of whether or not they are targeted to the same network. In other words, the checking in point 4-2 is skipped and even invitations targeted to other users of MO1 are routed to the proxy 1. The advantage of this solution is that the proxy takes care of security issues and domain/number portability issues so that an operator can outsource these tasks to the proxy service provider and the operator's need to build a separate infrastructure for the issues is avoided.

If tunnelling is used, one tunnel may exist between user A and the proxy 1, another from the proxy 1 to user B and still another from the proxy 1 to user C or, alternatively, a tunnel from the proxy 1 to the proxy 2, and yet another tunnel from proxy 2 to the user C. When the proxy is both an endpoint and a starting point of a tunnel, the proxy is able to monitor the traffic and perform the required functions.

The steps, points, messages and related functions described above in Figures 3 and 4 are in no absolute chronological order, and some of the steps, and/or points, and/or operations may be performed simultaneously or in an order differing from the one given here. Other functions can also be executed between the steps/points or within the steps/points. Some of the steps/points or part of the steps/points can also be omitted. Other messages can be transmitted and/or other steps/points can also be carried out between the illustrated ones. The messages are only examples and may also comprise other information. Furthermore, the messages may be different from the above-mentioned operations.

Although the invention is been described above assuming that the external proxy performs the checking, it is apparent to a person skilled in the art, that a domain may comprise a gateway, or a corresponding network node, which performs some or all of the above described checking. An example is an implementation in which the gateway in the domain checks whether or not the agreement exists and the proxy in the reliable network takes care of the other checking steps.

The system and network nodes implementing the functionality of the present invention not only comprise prior art means but also means for checking whether or not an agreement exists and preferably means for checking whether or not the sender is the one he/she claims to be. More precisely, they comprise means for implementing an embodiment according to the present invention. Present systems and network nodes comprise processors and memory that can be utilized in the functions according to the invention. All modifications and configurations required for implementing the invention may be performed as routines which may be implemented as added or updated software routines, application circuits (ASIC) and/or programmable circuits. Generally, program products include routines, programs, modules, objects, components, segments, schemas, data structures, etc. which perform particular tasks or implement particular abstract data types and which can be stored in any computer-readable data storage medium and which may be downloaded into an apparatus, such as network nodes.

It will be obvious to a person skilled in the art that, as the technology advances, the inventive concept can be implemented in various ways. The invention and its embodiments are not limited to the examples described above but may vary within the scope of the claims.

## Claims

1. A network node (41) in a communications system comprising at least a sender's domain and one or more receiver's domains, wherein the network node is a session initiation protocol network access gateway configured to maintain session information session-specifically, and the network node is arranged:
to recognize, on the basis of an indication contained in session-related traffic, the session to which the traffic relates;
to check, in response to receiving a message targeted to a receiver's domain, whether or not the message is a session termination related message;
if the message is not a session termination related message, to check whether the message is a session set-up message relating to establishment of a session;
if the message is a session set-up message, the network node is arranged:
to obtain at least name (41-1) and address (41-2) information on domains and information on interworking agreements (41-3) between domains from a database, the interworking agreement containing domain-specifically at least logical names of partner domains;
to check whether an address pair comprising the sender's domain's logical name and a routing address to the sender's domain, the address pair being in the name and address information obtained from the database, is the same as an address pair formed by a sender's domain's logical name in the session set-up message and an address indicating wherefrom the network node received the session set-up message;
if the address pairs are not the same, to send an error;
if the address pairs are the same:
to find out, by using said information obtained from the database, the receiver's domain on the basis of a receiver's name in the session set-up message;
to check, by using said information obtained from the database, whether or not there is a valid agreement between the receiver's domain and the sender's domain;
if there is not a valid agreement between the sender's domain and the receiver's domain, to send an error;
if there is a valid agreement between the sender's domain and the receiver's domain:
to initialize session information for the session;
to compare, by using said information obtained from the database, capabilities of the sender's domain with the capabilities of the receiver's domain, and if control plane capabilities differ, to perform required amendments to the session set-up message and to add to the session information an indication that control plane amendments are required or information on the required control plane amendments;
to check, by using said information obtained from the database, whether or not the proxy mode desired by the sender's domain is transparent proxy mode, and if the mode is not transparent proxy mode, to perform required amendments to the header of the session set-up message and to add to the session information an indication or information that back-to-back user agent proxy mode is to be used;
to check, by using said information obtained from the database, whether or not user plane capabilities of the sender's domain and user plane capabilities of the receiver's domain differ, and if user plane capabilities differ, to add to the session information an indication that user plane amendments are required or information on the required user plane amendments;
to forward the session set-up message to the address of the receiver's domain in said information obtained from the database;
to initialize, after forwarding the session set-up message, charging information for the session;
if the message is not a session termination related message and not a session set-up message relating to establishment of a session, the message is other session related information, and the network node is arranged to perform required charging-related procedures, if any, the required amendments, if any, and to forward the message to the address of the receiver's domain in said information obtained from the database; and
if the message is a session termination related message the network node is arranged to perform the required amendments, if any, to forward the message to the address of the receiver's domain in said information obtained from the database, to end charging and to delete the session information.

2. A network node (41) according to claim 1, wherein the network node (41) is further arranged to, in response to a receiver who has changed a subscription from a first operator to a second operator without changing the logical name, to find out at least the domain of the second operator.

3. A network node (41) according to any one of the preceding claims, wherein the network node (41) is further arranged to be both a tunnel endpoint and a tunnel starting point for inter-domain tunnelling.

4. A communications system (1) comprising:
at least a sender's domain (3) and one or more receiver's domains (3' 3")
a database (41-0) for maintaining at least name and address information on said domains and information on interworking agreements between said domains, the interworking agreement containing domain-specifically at least logical names of partner domains of a domain, the name and address information comprising domain-specific address pairs of a domain's logical name and a routing address to the domain, the database being external to said domains, and
one or more networks (4, 4') having at least controllable access and comprising one or more network nodes (41, 41') according to claim 1, 2 or 3, the one or more networks being external to said domains and connecting the sender's domain and the one or more receiver's domains, wherein
the system (1) is arranged to route at least signalling to and from the sender's domain (3, 3') via said one or more network nodes (41) by using any of the methods defined in claims 6 or 7, said one or more network nodes (41) comprising said database or being arranged to have access to said database.

5. A communications system according to claim 4, wherein the domains (3, 3', 3") are based on IMS and the network (4, 4') is based on GRX.

6. A method for providing inter-domain communications in a communications system comprising at least a sender's domain and one or more receiver's domains, the method comprising:
receiving (300), in a network node that is a session initiation protocol network access gateway configured to maintain session information session-specifically and to recognize, on the basis of an indication contained in session-related traffic, the session to which the traffic relates, a message targeted to a receiver's domain;
checking (301), by the network node, whether or not the message is a session termination related message;
if the message is not a session termination related message, checking (302), by the network node, whether the message is a session set-up message relating to establishment of a session;
if the message is a session set-up message, the method further comprises:
obtaining, by the network node, from a database at least name and address information on domains and information on interworking agreements between different domains, the interworking agreement containing domain-specifically at least logical names of partner domains of a domain;
checking (303), by the network node, whether or not an address pair comprising the sender's domain's logical name and a routing address to the sender's domain, the address pair being in the name and address information obtained from the database, is the same as an address pair formed by a sender's domain's logical name in the session set-up message and an address indicating wherefrom the session set-up message was received;
if the address pairs are not the same (304), sending (317) by the network node, an error;
if the address pairs are the same (304):
finding out, (305) by the network node using said information obtained from the database, the receiver's domain on the basis of a receiver's name in the session set-up message;
checking (309), by using by the network node said information obtained from the database, whether or not there is a valid agreement between the receiver's domain and the sender's domain;
if there is not a valid agreement (306) between the sender's domain and the receiver's domain, sending (317) by the network node an error;
if there is a valid agreement between (306) the sender's domain and the receiver's domain:
initializing (307) by the network node session information for the session;
comparing (308), by using by the network node said information obtained from the database, capabilities of the sender's domain with the capabilities of the receiver's domain, and if control plane capabilities differ (309), performing (310) required amendments to the session set-up message and adding to the session information an indication that control plane amendments are required or information on the required control plane amendments;
checking (311), by using by the network node said information obtained from the database, whether or not the proxy mode desired by the sender's domain is transparent proxy mode, and if the mode is not transparent proxy mode, performing required amendments to the header of the session set-up message and adding to the session information an indication or information that back-to-back user agent proxy mode is to be used;
checking (313), by using by the network node said information obtained from the database, whether or not user plane capabilities of the sender's domain and user plane capabilities of the receiver's domain differ, and if user plane capabilities differ, adding (314) to the session information an indication that user plane amendments are required or information on the required user plane amendments;
forwarding (315), by the network node, the session set-up message to the address of the receiver's domain in said information obtained from the database;
initializing (316), by the network node after forwarding the session set-up message, charging information for the session;
if the message is not a session termination related message and not a session set-up message relating to establishment of a session, the message is other session related information, and the method comprises performing (318), by the network node, required charging-related procedures, if any, the required amendments, if any, and forwarding, by the network node, the message to the address of the receiver's domain in said information obtained from the database; and
if the message is a session termination related message the method comprises performing (319), by the network node, the required amendments, if any, forwarding, by the network node, the message to the address of the receiver's domain in said information obtained from the database, ending, by the network node, charging and deleting, by the network node, the session information.

7. A method according to claim 6, further comprising finding out (305), in response to a receiver who has changed a subscription from a first operator to the second operator without changing the logical name, at least the domain of the second operator.

8. A computer program product embodied in a computer readable medium and comprising program instructions, wherein execution of said program instructions cause an apparatus containing the computer program product to perform the method of claim 6 or 7.

## Patentansprüche

1. Netzwerkknoten (41) in einem Kommunikationssystem, das mindestens eine Senderdomain und eine oder mehrere Empfängerdomains umfasst, wobei der Netzwerkknoten ein Sitzungsaufbauprotokoll-Netzwerkzugriffsgateway ist, das konfiguriert ist, um sitzungsspezifisch Sitzungsinformation zu unterhalten, und der Netzwerkknoten eingerichtet ist, um:
auf der Basis eines in dem Sitzungs-bezogenen Verkehrs enthaltenen Hinweises die Sitzung, auf die sich der Verkehr bezieht, zu erkennen;
als Reaktion auf ein Empfangen einer auf eine Empfängerdomain gezielte Nachricht zu prüfen, ob die Nachricht eine Sitzungsbeendigungs-bezogene Nachricht ist oder nicht;
wenn die Nachricht keine Sitzungsbeendigungs-bezogene Nachricht ist, zu prüfen, ob die Nachricht eine Sitzungsaufbaunachricht bezogen auf einen Aufbau einer Sitzung ist;
wenn die Nachricht eine Sitzungsaufbaunachricht ist, ist der Netzwerkknoten eingerichtet, um:
zumindest Namens- (41-1) und Adress- (41-2) Information über Domains und Information über Interworking-Vereinbarungen (41-3) zwischen Domains aus einer Datenbank zu erhalten, wobei die Interworking-Vereinbarung Domain-spezifisch zumindest logische Namen von Partnerdomains enthält;
zu prüfen, ob ein Adresspaar, das den logischen Namen der Senderdomain und eine Routingadresse zu der Senderdomain umfasst, wobei das Adresspaar in der aus der Datenbank erhaltenen Namens- und Adressinformation ist, dasselbe wie ein Adresspaar ist, das durch einen logischen Namen der Senderdomain in der Sitzungsaufbaunachricht und eine Adresse, die anzeigt, von wo der Netzwerkknoten die Sitzungsaufbaunachricht empfangen hat, gebildet ist;
wenn die Adresspaare nicht dieselben sind, einen Fehler zu senden;
wenn die Adresspaare dieselben sind:
unter Verwendung der aus der Datenbank erhaltenen Information die Empfängerdomain auf der Basis des Empfängernamens in der Sitzungsaufbaunachricht herauszufinden;
unter Verwendung der aus der Datenbank erhaltenen Information zu prüfen, ob es eine gültige Vereinbarung zwischen der Empfängerdomain und der Senderdomain gibt oder nicht;
wenn es keine gültige Vereinbarung zwischen der Senderdomain und der Empfängerdomain gibt, einen Fehler zu senden;
wenn es eine gültige Vereinbarung zwischen der Senderdomain und der Empfängerdomain gibt:
Sitzungsinformation für die Sitzung zu initialisieren;
unter Verwendung der aus der Datenbank erhaltenen Information Fähigkeiten der Senderdomain mit den Fähigkeiten der Empfängerdomain zu vergleichen und, wenn sich Steuerungsebenefähigkeiten unterscheiden, erforderliche Änderungen an der Sitzungsaufbaunachricht durchzuführen und zu der Sitzungsinformation einen Hinweis, dass Steuerungsebeneänderungen erforderlich sind, oder Information über die erforderlichen Steuerungsebeneänderungen hinzuzufügen;
unter Verwendung der aus der Datenbank erhaltenen Information zu prüfen, ob der von der Senderdomain gewünschte Proxymodus ein transparenter Proxymodus ist oder nicht, und wenn der Modus kein transparenter Proxymodus ist,
erforderliche Änderungen an der Kopfzeile der Sitzungsaufbaunachricht durchzuführen und zu der Sitzungsinformation einen Hinweis oder Information, dass ein "Back-to-Back"-Benutzer-Agent-Proxymodus zu verwenden ist, hinzuzufügen;
unter Verwendung der aus der Datenbank erhaltenen Information zu prüfen, ob sich Benutzerebenefähigkeiten der Senderdomain und Benutzerebenefähigkeiten der Empfängerdomain unterscheiden oder nicht, und, wenn sich Benutzerebenefähigkeiten unterscheiden, zu der Sitzungsinformation einen Hinweis, dass Benutzerebeneänderungen erforderlich sind, oder Information über die erforderlichen Benutzerebeneänderungen hinzuzufügen;
die Sitzungsaufbaunachricht an die Adresse der Empfängerdomain in der aus der Datenbank erhaltenen Information weiterzuleiten;
nach einem Weiterleiten der Sitzungsaufbaunachricht Gebühreninformation für die Sitzung zu initialisieren;
wenn die Nachricht keine Sitzungsbeendigungs-bezogene Nachricht ist und keine Sitzungsaufbaunachricht bezogen auf einen Aufbau einer Sitzung ist, die Nachricht andere Sitzungs-bezogene Information ist und der Netzwerkknoten eingerichtet ist, um erforderliche Gebühren-bezogene Prozeduren, wenn überhaupt, die erforderlichen Änderungen, wenn überhaupt, durchzuführen und die Nachricht an die Adresse der Empfängerdomain in der aus der Datenbank erhaltenen Information weiterzuleiten; und
wenn die Nachricht eine Sitzungsbeendigungs-bezogene Nachricht ist, ist der Netzwerkknoten eingerichtet, um die erforderlichen Änderungen, wenn überhaupt, durchzuführen, die Nachricht an die Adresse der Empfängerdomain in der aus der Datenbank erhaltenen Information weiterzuleiten, die Gebührenbelastung zu beenden und die Sitzungsinformation zu löschen.

2. Netzwerkknoten (41) nach Anspruch 1, wobei der Netzwerkknoten (41) weiter eingerichtet ist, um als Reaktion auf einen Empfänger, der ein Abonnement von einem ersten Betreiber zu einem zweiten Betreiber geändert hat, ohne den logischen Namen zu ändern, zumindest eine Domain des zweiten Betreibers herauszufinden.

3. Netzwerkknoten (41) nach einem der vorstehenden Ansprüche, wobei der Netzwerkknoten (41) weiter eingerichtet ist, um sowohl ein Tunnel-Endpunkt als auch ein Tunnel-Startpunkt für ein Zwischen-Domain-Tunneln zu sein.

4. Kommunikationssystem (1) umfassend:
zumindest eine Senderdomain (3) und eine oder mehrere Empfängerdomains (3', 3"), eine Datenbank (41-0) zum Unterhalten von zumindest Namens- und Adressinformation über die Domains und Information über Interworking-Vereinbarungen zwischen den Domains, wobei die Interworking-Vereinbarung Domain-spezifisch zumindest logische Namen von Partnerdomains einer Domain enthält, die Namens- und Adressinformation Domain-spezifische Adresspaare eines logischen Namens der Domain und einer Routing-Adresse zu der Domain umfasst und wobei die Datenbank extern zu den Domains ist und
ein oder mehrere Netzwerke (4, 4'), die zumindest steuerbaren Zugriff haben und einen oder mehrere Netzwerkknoten (41, 41') nach Anspruch 1, 2 oder 3 umfassen, wobei das eine oder die mehreren Netzwerke extern zu den Domains sind und die Senderdomain und die eine oder mehreren Empfängerdomains verbinden, wobei
das System (1) eingerichtet ist, um zumindest Signalisierung zu und von der Senderdomain (3, 3') über den einen oder die mehreren Netzwerkknoten (41) unter Verwendung eines der in den Ansprüchen 6 oder 7 definierten Verfahrens zu routen, wobei der eine oder die mehreren Netzwerkknoten (41) die Datenbank umfassen oder eingerichtet sind, um Zugriff auf die Datenbank zu haben.

5. Kommunikationssystem nach Anspruch 4, wobei die Domains (3, 3', 3") auf IMS basieren und das verlässliche Netzwerk (4, 4') auf GRX basiert.

6. Verfahren zum Bereitstellen von Zwischen-Domain-Kommunikationen in einem Kommunikationssystem, das zumindest eine Senderdomain und eine oder mehrere Empfängerdomains umfasst, wobei das Verfahren umfasst:
Empfangen (300), in einem Netzwerkknoten, der ein Sitzungsaufbauprotokoll-Netzwerkzugriffsgateway ist, das konfiguriert ist, um sitzungsspezifisch Sitzungsinformation zu unterhalten und auf der Basis eines in dem Sitzungs-bezogenen Verkehrs enthaltenen Hinweises die Sitzung, auf die sich der Verkehr bezieht, zu erkennen, einer auf eine Empfängerdomain gezielte Nachricht;
Prüfen (301), durch den Netzwerkknoten, ob die Nachricht eine Sitzungsbeendigungs-bezogene Nachricht ist oder nicht;
wenn die Nachricht keine Sitzungsbeendigungs-bezogene Nachricht ist, Prüfen (302), durch den Netzwerkknoten, ob die Nachricht eine Sitzungsaufbaunachricht bezogen auf einen Aufbau einer Sitzung ist;
wenn die Nachricht eine Sitzungsaufbaunachricht ist, umfasst das verfahren weiter:
Erhalten, durch den Netzwerkknoten, aus einer Datenbank von zumindest Namens- und Adressinformation über Domains und Information über Interworking-Vereinbarungen zwischen unterschiedlichen Domains, wobei die Interworking-Vereinbarung Domain-spezifisch zumindest logische Namen von Partnerdomains einer Domain enthält;
Prüfen (303), durch den Netzwerkknoten, ob ein Adresspaar, das den logischen Namen der Senderdomain und eine Routingadresse zu der Senderdomain umfasst, wobei das Adresspaar in der aus der Datenbank erhaltenen Namens- und Adressinformation ist, dasselbe wie ein Adresspaar ist, das durch einen logischen Namen der Senderdomain in der Sitzungsaufbaunachricht und eine Adresse, die anzeigt, von wo der Netzwerkknoten die Sitzungsaufbaunachricht empfangen hat, gebildet ist;
wenn die Adresspaare nicht dieselben sind (304), Senden (317) einen Fehlers durch den Netzwerkknoten;
wenn die Adresspaare dieselben sind (304):
Herausfinden (305), durch den Netzwerkknoten unter Verwendung der aus der Datenbank erhaltenen Information, der Empfängerdomain auf der Basis eines Empfängernamens in der Sitzungsaufbaunachricht;
Prüfen (309), unter Verwendung der aus der Datenbank erhaltenen Information, ob es eine gültige Vereinbarung zwischen der Empfängerdomain und der Senderdomain gibt oder nicht;
wenn es keine gültige Vereinbarung (306) zwischen der Senderdomain und der Empfängerdomain gibt, Senden (317) eines Fehlers durch den Netzwerkknoten;
wenn es eine gültige Vereinbarung zwischen (306) der Senderdomain und der Empfängerdomain gibt:
Initialisieren (307), durch den Netzwerkknoten, von Sitzungsinformation für die Sitzung;
Vergleichen (308), unter Verwendung durch den Netzwerkknoten der aus der Datenbank erhaltenen Information, von Fähigkeiten der Senderdomain mit den Fähigkeiten der Empfängerdomain und, wenn sich Steuerungsebenefähigkeiten unterscheiden (309), Durchführen (310) von erforderlichen Änderungen an der Sitzungsaufbaunachricht und Hinzufügen eines Hinweises, dass Steuerungsebeneänderungen erforderlich sind, oder Information über die erforderlichen Steuerungsebeneänderungen zu der Sitzungsinformation;
Prüfen (311), unter Verwendung der aus der Datenbank erhaltenen Information, ob der von der Senderdomain gewünschte Proxymodus ein transparenter Proxymodus ist oder nicht, und wenn der Modus kein transparenter Proxymodus ist, Durchführen von erforderlichen Änderungen an der Kopfzeile der Sitzungsaufbaunachricht und Hinzufügen eines Hinweises oder Information, dass ein "Back-to-Back"-Benutzer-Agent-Proxymodus zu verwenden ist, zu der Sitzungsinformation;
Prüfen (313), unter Verwendung durch den Netzwerkknoten der aus der Datenbank erhaltenen Information, ob sich Benutzerebenefähigkeiten der Senderdomain und Benutzerebenefähigkeiten der Empfängerdomain unterscheiden oder nicht, und, wenn sich Benutzerebenefähigkeiten unterscheiden, Hinzufügen (314) eines Hinweises, dass Benutzerebeneänderungen erforderlich sind, oder Information über die erforderlichen Benutzerebeneänderungen zu der Sitzungsinformation;
Weiterleiten (315), durch den Netzwerkknoten, der Sitzungsaufbaunachricht an die Adresse der Empfängerdomain in der aus der Datenbank erhaltenen Information;
Initialisieren (316) von Gebühreninformation für die Sitzung, durch den Netzwerkknoten, nach einem Weiterleiten der Sitzungsaufbaunachricht;
wenn die Nachricht keine Sitzungsbeendigungs-bezogene Nachricht ist und keine Sitzungsaufbaunachricht bezogen auf einen Aufbau einer Sitzung ist, ist die Nachricht andere Sitzungs-bezogene Information und umfasst das Verfahren ein Durchführen (318), durch den Netzwerkknoten, erforderlicher Gebührenbezogener Prozeduren, wenn überhaupt, erforderlicher Änderungen, wenn überhaupt, und ein Weiterleiten, durch den Netzwerkknoten, der Nachricht an die Adresse der Empfängerdomain in der aus der Datenbank erhaltenen Information; und
wenn die Nachricht eine Sitzungsbeendigungs-bezogene Nachricht ist, umfasst das Verfahren ein Durchführen (319), durch den Netzwerkknoten, der erforderlichen Änderungen, wenn überhaupt, ein Weiterleiten, durch den Netzwerkknoten, der Nachricht an die Adresse der Empfängerdomain in der aus der Datenbank erhaltenen Information, ein Beendigen, durch den Netzwerkknoten, der Gebührenbelastung und ein Löschen, durch den Netzwerkknoten, der Sitzungsinformation.

7. Verfahren nach Anspruch 6, weiter umfassend ein Herausfinden (305), als Reaktion auf einen Empfänger, der ein Abonnement von einem ersten Betreiber zu einem zweiten Betreiber geändert hat, ohne den logischen Namen zu ändern, zumindest der Domain des zweiten Betreibers.

8. Computerprogrammprodukt, das in einem computerlesbaren Medium verkörpert ist und Programminstruktionen umfasst, wobei ein Ausführen der Programminstruktionen bewirkt, dass eine Vorrichtung, die das Computerprogrammprodukt enthält, das Verfahren nach Anspruch 6 oder 7 durchführt.

## Revendications

1. Noeud de réseau (41) dans un système de communication comprenant au moins un domaine de l'émetteur et un ou plusieurs domaines du récepteur, dans lequel le noeud de réseau est une passerelle d'accès au réseau de protocole d'ouverture de session configurée pour maintenir des informations de session spécifiquement à la session, et le noeud de réseau est agencé pour :
reconnaître, sur la base d'une indication contenue dans un trafic lié à la session, la session à laquelle le trafic est lié ;
vérifier, en réponse à la réception d'un message ciblé à un domaine du récepteur, si le message est ou non un message lié à une terminaison de session ;
si le message n'est pas un message lié à une terminaison de session, vérifier si le message est un message de configuration de session relatif à l'établissement d'une session ;
si le message est un message de configuration de session, le noeud de réseau est agencé pour :
obtenir au moins des informations de nom (41-1) et d'adresse (41-2) sur des domaines et des informations sur des accords d'interfonctionnement (41-3) entre des domaines à partir d'une base de données, l'accord d'interfonctionnement contenant spécifiquement au domaine au moins des noms logiques de domaines partenaires ;
vérifier si une paire d'adresses comprenant le nom logique du domaine de l'émetteur et une adresse d'acheminement au domaine de l'émetteur, la paire d'adresses étant dans les informations de nom et d'adresse obtenues à partir de la base de données, est la même qu'une paire d'adresses formée par un nom logique du domaine de l'émetteur dans le message de configuration de session et une adresse indiquant d'où le noeud de réseau a reçu le message de configuration de session ;
si les paires d'adresses ne sont pas les mêmes, envoyer une erreur ;
si les paires d'adresses sont les mêmes :
découvrir, en utilisant lesdites informations obtenues à partir de la base de données, le domaine du récepteur sur la base d'un nom du récepteur dans le message de configuration de session ;
vérifier, en utilisant lesdites informations obtenues à partir de la base de données, s'il existe ou non un accord valide entre le domaine du récepteur et le domaine de l'émetteur ;
s'il n'existe pas un accord valide entre le domaine de l'émetteur et le domaine du récepteur, envoyer une erreur ;
s'il existe un accord valide entre le domaine de l'émetteur et le domaine du récepteur :
initialiser des informations de session pour la session ;
comparer, en utilisant lesdites informations obtenues à partir de la base de données, des capacités du domaine de l'émetteur avec les capacités du domaine du récepteur, et si des capacités de plan de commande diffèrent, réaliser des modifications nécessaires sur le message de configuration de session et ajouter aux informations de session une indication selon laquelle des modifications de plan de commande sont nécessaires ou des informations sur les modifications de plan de commande nécessaires ;
vérifier, en utilisant lesdites informations obtenues à partir de la base de données, si le mode proxy désiré par le domaine de l'émetteur est ou non un mode proxy transparent, et si le mode n'est pas un mode proxy transparent, réaliser des modifications nécessaires sur l'en-tête du message de configuration de session et ajouter aux informations de session une indication ou des informations selon lesquelles un mode proxy d'agent utilisateur dos-à-dos doit être utilisé ;
vérifier, en utilisant lesdites informations obtenues à partir de la base de données, si des capacités de plan d'utilisateur du domaine de l'émetteur et des capacités de plan utilisateur du domaine du récepteur diffèrent ou non, et si des capacités de plan d'utilisateur diffèrent, ajouter aux informations de session une indication selon laquelle des modifications de plan d'utilisateur sont nécessaires ou des informations sur les modifications de plan d'utilisateur nécessaires ;
transférer le message de configuration de session à l'adresse du domaine du récepteur dans lesdites informations obtenues à partir de la base de données ;
initialiser, après le transfert du message de configuration de session, des informations de taxation pour la session ;
si le message n'est pas un message lié à une terminaison de session et n'est pas un message de configuration de session relatif à l'établissement d'une session, le message est d'autres informations liées à la session, et le noeud de réseau est agencé pour réaliser des procédures nécessaires liées à la taxation, le cas échéant, les modifications nécessaires, le cas échéant, et transférer le message à l'adresse du domaine du récepteur dans lesdites informations obtenues à partir de la base de données ; et
si le message est un message lié à une terminaison de session, le noeud de réseau est agencé pour réaliser les modifications nécessaires, le cas échéant, transférer le message à l'adresse du domaine du récepteur dans lesdites informations obtenues à partir de la base de données, mettre fin à la taxation et supprimer les informations de session.

2. Noeud de réseau (41) selon la revendication 1, dans lequel le noeud de réseau (41) est agencé en outre pour, en réponse à un récepteur qui a changé un abonnement d'un premier opérateur à un deuxième opérateur sans changer le nom logique, découvrir au moins le domaine du deuxième opérateur.

3. Noeud de réseau (41) selon l'une quelconque des revendications précédentes, dans lequel le noeud de réseau (41) est agencé en outre pour être à la fois un point de fin de tunnel et un point de début de tunnel pour une tunnelisation inter-domaine.

4. Système de communication (1) comprenant :
au moins un domaine de l'émetteur (3) et un ou plusieurs domaines du récepteur (3', 3"), une base de données (41-0) pour maintenir au moins des informations de nom et d'adresse sur lesdits domaines et des informations sur des accords d'interfonctionnement entre lesdits domaines, l'accord d'interfonctionnement contenant spécifiquement au domaine au moins des noms logiques de domaines partenaires d'un domaine, les informations de nom et d'adresse comprenant des paires d'adresses spécifiques au domaine d'un nom logique du domaine et une adresse d'acheminement vers le domaine, la base de données étant externe auxdits domaines, et
un ou plusieurs réseaux (4, 4') ayant au moins un accès pouvant être commandé et comprenant un ou plusieurs noeuds de réseau (41, 41') selon la revendication 1, 2 ou 3, les un ou plusieurs réseaux étant externes auxdits domaines et connectant le domaine de l'émetteur et les un ou plusieurs domaines du récepteur, dans lequel
le système (1) est agencé pour acheminer au moins une signalisation en direction et en provenance du domaine de l'émetteur (3, 3') par le biais desdits un ou plusieurs noeuds de réseau (41) en utilisant l'un quelconque des procédés définis dans les revendications 6 ou 7, lesdits un ou plusieurs noeuds de réseau (41) comprenant ladite base de données ou étant agencés pour avoir accès à ladite base de données.

5. Système de communication selon la revendication 4, dans lequel les domaines (3, 3', 3") sont basés sur IMS et le réseau fiable (4, 4') est basé sur GRX.

6. Procédé pour fournir des communications inter-domaine dans un système de communication comprenant au moins un domaine de l'émetteur et un ou plusieurs domaines du récepteur, le procédé comprenant :
la réception (300), dans un noeud de réseau qui est une passerelle d'accès au réseau de protocole d'ouverture de session configurée pour maintenir des informations de session spécifiquement à la session et reconnaître, sur la base d'une indication contenue dans un trafic lié à la session, la session à laquelle le trafic est lié, un message ciblé à un domaine du récepteur ;
la vérification (301), par le noeud de réseau, du fait que le message est ou non un message lié à une terminaison de session ;
si le message n'est pas un message lié à une terminaison de session, la vérification (302), par le noeud de réseau, du fait que le message est un message de configuration de session relatif à l'établissement d'une session ;
si le message est un message de configuration de session, le procédé comprend en outre :
l'obtention, par le noeud de réseau, à partir d'une base de données au moins d'informations de nom et d'adresse sur des domaines et d'informations sur des accords d'interfonctionnement entre des domaines différents, l'accord d'interfonctionnement contenant spécifiquement au domaine au moins des noms logiques de domaines partenaires d'un domaine ;
la vérification (303), par le noeud de réseau, du fait qu'une paire d'adresses comprenant le nom logique du domaine de l'émetteur et une adresse d'acheminement au domaine de l'émetteur, la paire d'adresses étant dans les informations de nom et d'adresse obtenues à partir de la base de données, est la même qu'une paire d'adresses formée par un nom logique du domaine de l'émetteur dans le message de configuration de session et une adresse indiquant d'où le noeud de réseau a reçu le message de configuration de session ;
si les paires d'adresses ne sont pas les mêmes (304), l'envoi (317) d'une erreur par le noeud de réseau ;
si les paires d'adresses sont les mêmes (304) :
la découverte (305), par le noeud de réseau en utilisant lesdites informations obtenues à partir de la base de données, du domaine du récepteur sur la base d'un nom du récepteur dans le message de configuration de session ;
la vérification (309), en utilisant par le noeud de réseau lesdites informations obtenues à partir de la base de données, du fait qu'il existe ou non un accord valide entre le domaine du récepteur et le domaine de l'émetteur ;
s'il n'existe pas un accord valide (306) entre le domaine de l'émetteur et le domaine du récepteur, l'envoi (317) d'une erreur par le noeud de réseau ;
s'il existe un accord valide (306) entre le domaine de l'émetteur et le domaine du récepteur :
l'initialisation (307), par le noeud de réseau, d'informations de session pour la session ;
la comparaison (308), en utilisant par le noeud de réseau lesdites informations obtenues à partir de la base de données, de capacités du domaine de l'émetteur avec les capacités du domaine du récepteur, et si des capacités de plan de commande diffèrent (309), la réalisation (310) de modifications nécessaires sur les messages de configuration de session et l'ajout aux informations de session d'une indication selon laquelle des modifications de plan de commande sont nécessaires ou des informations sur les modifications de plan de commande nécessaires ;
la vérification (311), en utilisant par le noeud de réseau lesdites informations obtenues à partir de la base de données, du fait que le mode proxy désiré par le domaine de l'émetteur est ou non un mode proxy transparent, et si le mode n'est pas un mode proxy transparent, la réalisation de modifications nécessaires sur l'en-tête du message de configuration de session et l'ajout aux informations de session d'une indication ou des informations selon lesquelles un mode proxy d'agent utilisateur dos-à-dos doit être utilisé ;
la vérification (313), en utilisant par le noeud de réseau lesdites informations obtenues à partir de la base de données, du fait que des capacités de plan d'utilisateur du domaine de l'émetteur et des capacités de plan utilisateur du domaine du récepteur diffèrent ou non, et si des capacités de plan d'utilisateur diffèrent, l'ajout (314) aux informations de session d'une indication selon laquelle des modifications de plan d'utilisateur sont nécessaires ou des informations sur les modifications de plan d'utilisateur nécessaires ;
le transfert (315), par le noeud de réseau, du message de configuration de session à l'adresse du domaine du récepteur dans lesdites informations obtenues à partir de la base de données ;
l'initialisation (316), par le noeud de réseau après le transfert du message de configuration de session, d'informations de taxation pour la session ;
si le message n'est pas un message lié à une terminaison de session et n'est pas un message de configuration de session relatif à l'établissement d'une session, le message est d'autres informations liées à la session, et le procédé comprend la réalisation (318), par le noeud de réseau, de procédures nécessaires liées à la taxation, le cas échéant, des modifications nécessaires, le cas échéant, et le transfert, par le noeud de réseau, du message à l'adresse du domaine du récepteur dans lesdites informations obtenues à partir de la base de données ; et
si le message est un message lié à une terminaison de session, le procédé comprend la réalisation (319), par le noeud de réseau, des modifications nécessaires, le cas échéant, le transfert, par le noeud de réseau, du message à l'adresse du domaine du récepteur dans lesdites informations obtenues à partir de la base de données, la fin, par le noeud de réseau, de la taxation et la suppression, par le noeud de réseau, des informations de session.

7. Procédé selon la revendication 6, comprenant en outre la découverte (305), en réponse à un récepteur qui a changé un abonnement d'un premier opérateur au deuxième opérateur sans changer le nom logique, d'au moins le domaine du deuxième opérateur.

8. Produit de programme informatique mis en oeuvre sur un support lisible par ordinateur et comprenant des instructions de programme, dans lequel une exécution desdites instructions de programme amène un appareil contenant le produit de programme informatique à réaliser le procédé selon la revendication 6 ou 7.
